# EUROPÄISCHE PATENTSCHRIFT

(11) **EP 1 099 652 B1**
(45) Veröffentlichungstag und Bekanntmachung des Hinweises auf die Patenterteilung: **17.03.2004**
(21) Anmeldenummer: 00123834.4
(22) Anmeldetag: 02.11.2000
(51) Int. Cl.: B65G 1/137, B65G 1/02, B65G 1/08

(54) **Verfahren und Vorrichtung zum Kommissionieren**
Method and device for order picking
Procédé et dispositif pour la préparation de commandes

(30) Priorität: 09.11.1999 DE 19953812
(43) Veröffentlichungstag der Anmeldung: 16.05.2001
(73) Patentinhaber: psb GmbH Materialfluss + Logistik, 66955 Pirmasens (DE)
(72) Erfinder: Behrens, Uwe, Dipl.-Ing., 76855 Annweiler am Trifels (DE); Bohrer, Lothar, Dipl.-Ing., 66955 Pirmasens (DE)
(74) Vertreter: Patentanwälte Möll und Bitterich

(56) Entgegenhaltungen:
- EP-A- 0 847 939
- FR-A- 1 382 511
- US-A- 4 485 910

## Beschreibung

Die Erfindung betrifft Verfahren zum Kommissionieren einer Vielzahl von Artikeln, die sich in einer entsprechenden Vielzahl von Behältern befinden, gemäß dem Oberbegriff des Anspruchs 1. Die Erfindung betrifft femer Vorrichtungen zur Durchführung des Verfahrens.

Der Begriff "Behälter" steht hier als Oberbegriff für alle in der Praxis verwendbaren Transport- und Lagerhilfsmittel wie Kästen, Kartons, Trays, Paletten usw.

Das Kommissionieren von Waren entsprechend den Bestellungen der Kunden ist auch heute noch im wesentlichen Handarbeit. Eine oder mehrere Personen entnimmt dazu aus Behältern, die den Warenvorrat nach Artikeln sortiert enthalten, die Art und Anzahl der Waren, die der Kunde bestellt hat, und hebt sie in einen Auftragsbehälter. Damit das Kommissionieren möglichst zeit- und kräftesparend erfolgen kann, gibt es spezielle Kommissioniersysteme. Das sind Lagersysteme mit Lagerregalen, Regalbediengeräten usw., die es ermöglichen, die Waren zu bevorraten und sie dem Kommissionierer möglichst zeit- und platzsparend zur Verfügung zu stellen.

Ein großes Problem der herkömmlichen Kommissioniersysteme ist das Platzproblem. Angenommen, es werden nur 6000 verschiedene Artikel kommissioniert, die in Behältern von nur 50 cm Breite eingelagert sind, so ergibt sich ein Kommissioniersystem von 3000 m Breite. Selbst wenn man die Behälter in drei Ebenen übereinander anordnet, erhält man ein Kommissioniersystem von 1000 m Breite. So viel Platz steht heute meistens nicht zur Verfügung, ganz abgesehen davon, dass es einem Menschen nicht zuzumuten ist, täglich viele Kilometer zu Fuß zurückzulegen und dabei auch noch fehlerfrei zu kommissionieren.

Es wurden daher Verfahren und Vorrichtungen entwickelt, die hier Erleichterung bringen konnten. Dazu wurde zwischen zwei Artikeltypen unterschieden, sogenannten Schnellläufem und sogenannten Langsamläufem.

Schnellläufer sind Artikel, die häufig oder in größeren Mengen benötigt werden. Hier erfolgt die Kommissionierung nach dem Prinzip "Ware zum Mann". Das bedeutet, dass die Behälter mit der Ware aus dem Lager zum Kommissionierpersonal gebracht wird, so dass dieses die Artikel gemäß Bestellliste, gegebenenfalls unterstützt durch eine "Pick-by-Light" genannte elektronische Bedienerführung, nur noch aus den Behältern herausnehmen muss. Sind die Behälter leer, werden sie durch volle ersetzt.

Langsamläufer sind Artikel, die selten oder in kleinen Mengen benötigt werden. Hier erfolgt die Kommissionierung nach dem Prinzip "Mann zur Ware". Das bedeutet, dass der Kommissionierer an die Regalfächer läuft, in denen die gewünschten Artikel vorgehalten werden, um sie in seinen Auftragsbehälter zu legen.

Aus der DE 197 19 651 A ist ein Verfahren und eine zur Durchführung des Verfahrens geeignete Vorrichtung zum Kommissionieren von sogenannten Schnellläufern und sogenannten Langsamläufem bekannt. Dieses System besteht aus einem Regallager mit einer Vielzahl von Lagerfächem, in denen die zu kommissionierenden Artikel in Behältern vorrätig gehalten werden. Ein Regalbediengerät transportiert die Behälter in die Regalfächer und holt sie auch wieder aus den Regalfächem ab. Des weiteren gibt es eine Anzahl von sogenannten Kommissionierkanälen in Form von Rollenbahnen, die zum kommissionierenden Personal hin geneigt sind. Das Regalbediengerät holt einen gewünschten Behälter aus seinem Regalfach und setzt ihn auf den vorher bestimmten Kommissionierkanal, wo der Behälter dann unter dem Einfluss der Schwerkraft an einen vorderen Anschlag läuft. Wird dieser Behälter nicht mehr benötigt, so wird er die Rollenbahn hinaufgeschoben, vom Regalbediengerät abgeholt und in ein freies Regalfach gestellt. Anschließend holt das Regalbediengerät einen anderen Behälter mit Artikeln, die jetzt benötigt werden, und setzt ihn auf den freien Kommissionierkanal.

Bei diesem Kommissioniersystem müssen also die mehr oder weniger vollen Behälter vom Personal die schräge Rollenbahn zurückgeschoben werden, damit sie vom Regalbediengerät wieder abgeholt werden können. Dies ist mit einer körperlichen Anstrengung verbunden, insbesondere wenn die Rollenbahn so lang ist, dass zwei oder drei Behälter hintereinander stehen, wie dies bei Schneilläufer-Artikeln auch unbedingt erforderlich ist Eine Automatisierung der Umlagerung ist nicht vorgesehen.

Aus der US 4,485,910 ist ein Handhabesystem für Container bekannt, bei dem die Container allein unter dem Einfluss der Schwerkraft auf einem System von Rollenbahnen bewegt werden. Jedes System besteht aus drei Rollenbahnen. Rückwärtig sind zwei Rollenbahnen übereinander montiert, wobei die untere Rollenbahn starr, die obere Rollenbahn um ihre Querachse kippbar montiert ist. Im vorderen Bereich ist eine einzige Rollenbahn vorgesehen. Diese ist um ihre Querachse derart kippbar, dass ihr rückwärtiges Ende entweder mit der soeben beschriebenen oberen oder mit der soeben beschriebenen unteren Rollenbahn fluchtet. Zum Transport eines Behälters müssen daher jeweils zwei Rollenbahnen gekippt werden, wodurch der Transportvorgang verlangsamt wird. Außerdem ist die Vorrichtung aufgrund der Vielzahl der Einzelelemente besonders aufwändig.

Der vorliegenden Erfindung liegt die Aufgabe zugrunde, ein Verfahren und eine zu seiner Durchführung geeignete Vorrichtung anzugeben, mit denen die bekannten Kommissioniersysteme sich noch weiter beschleunigen lassen und gleichzeitig den kommissionierenden Personen die Arbeit erleichtert wird.

Diese Aufgabe wird gelöst durch ein Verfahren mit den Merkmalen des Anspruchs 1 bzw. durch eine Vorrichtung mit den Merkmalen des Anspruchs 6.

Das erfindungsgemäße System unterscheidet nicht mehr zwischen Schnelläufer- und Langsamläufer-Artikeln, sondern behandelt beide Arten von Artikeln gleich. Die Ware wird vollautomatisch zum Mann gebracht und ebenso vollautomatisch wieder abgeholt und in ein Regalfach zurückgestellt, wenn der Artikel nicht mehr benötigt wird. Der Transport der Behälter auf den Kommissionierkanälen erfolgt allein unter dem Einfluss der Schwerkraft, und zwar in beiden Richtungen. Die Bedienungsperson ist insoweit völlig entlastet, auch was den Austausch der Behälter betrifft, und kann sich daher ganz auf ihre Tätigkeit konzentrieren.

Ein weiteres für die Erfindung wichtiges Merkmal ist die Tatsache, dass jeder Kommissionierkanal einstückig ist. Es muss also nur ein Teil bewegt werden, um die Behälter von der Übergabestelle zur Kommissionierposition und wieder zurück zu kippen.

Für das Auslösen des Kippvorgangs gibt es mehrere Möglichkeiten. Gemäß einer ersten Möglichkeit wird das Kippen von der Bedienungsperson ausgelöst, indem diese auf einen entsprechenden Knopf drückt. Dieser Knopfdruck wird gleichzeitig an die übergeordnete Programmsteuerung gemeldet, die daraufhin das Regalbediengerät startet.

Gemäß einer zweiten Möglichkeit wird das Kippen vom Regalbediengerät ausgelöst, welches dazu mit geeigneten mechanischen und/oder elektrischen Vorrichtungen ausgerüstet ist.

Schließlich besteht die Möglichkeit, das Kippen unmittelbar von der übergeordneten Programmsteuerung, der zuvor die abzuarbeitenden Kommissionen eingegeben worden waren, auslösen zu lassen.

Wie schon erwähnt, können in einem Kommissionierkanal ein, zwei oder mehr Behälter mit Ware hintereinander angeordnet sein. Des weiteren gibt es Regale, bei denen zwei Behälter hintereinander in einem Regalfach angeordnet sind. In solchen Lagern empfiehlt es sich, das Regalbediengerät mit der Fähigkeit auszurüsten, Behälter umzusortieren. Diese Fähigkeit beschleunigt auch den Produktwechsel, da das Regalbediengerät bei der Fahrt zum Entfernen eines nicht mehr benötigten Behälters bereits den Behälter mit der neuen Ware mitbringen kann.

Eine Vorrichtung zur Durchführung des erfindungsgemäßen Kommissionierverfahrens zeichnet sich dadurch aus, dass die Kommissionierkanäle einteilig und um ihre Querachse kippbar sind. Dadurch können die Behälter mit den zu kommissionierenden Waren ohne anzuhalten unter dem Einfluss der Schwerkraft vom Regalbediengerät zum kommissionierenden Personal und ebenso wieder zurück zum Regalbediengerät rollen. Die Behälter stehen immer in einer definierten Position. Dies erleichtert und beschleunigt das Kommissionieren zusätzlich. Durch die größere Geschwindigkeit lassen sich die Behälter mit den zu kommissionierenden Waren auch sehr viel schneller und öfter auswechseln, so dass weitaus weniger Behälter in der Ebene nebeneinander vorgehalten werden müssen, was zu einem erheblich geringeren Platzbedarf des erfindungsgemäßen Kommissioniersystems führt.

Der Begriff "Regalbediengerät" steht hier als Oberbegriff für alle Arten von Fördereinrichtungen, die den automatischen Transport der Behälter bewerkstelligen können, z. B. auch für Verschiebewagen.

Vorzugsweise besitzen die Kommissionierkanäle beidseitig Endanschläge, wobei der Endanschlag an der Übergabestelle vorzugsweise beweglich ist, um das Einlagern und das Herausziehen der Behälter durch das Regalbediengerät nicht zu behindern.

Vorteilhafterweise sind die Kommissionierkanäle als Rollenbahn ausgeführt. Rollenbahnen haben sich als sehr betriebssicher erwiesen. Da die Rollen leicht laufen, genügen schon geringe Schrägstellungen für einen schnellen und sicheren Transport der Behälter.

Vorteilhafterweise sind die Kommissionierkanäle in ihrer jeweiligen Winkelstellung einrast- und verriegelbar.

Für das Kippen der Kommissionierkanäle in die eine oder andere Winkelstellung gibt es mehrere Möglichkeiten. Gemäß einer ersten Variante ist jedem Kommissionierkanal ein Pneumatik- oder Hydraulikzylinder zugeordnet. Eine zweite, bevorzugte Variante sieht eine Betätigungsvorrichtung vor, die am Regalbediengerät angebracht ist und die die Kommissionierkanäle in die jeweilige Winkelstellung verschwenkt. Dabei ist von Vorteil, dass für den ganzen Lagerbereich nur eine einzige Betätigungsvorrichtung erforderlich ist.

Je nach dem Programm, welches den Kommissioniervorgang steuert, kann es von Vorteil sein, wenn das Regalbediengerät zwei Lastaufnahmemittel besitzt und/oder wenn das Regalbediengerät ein Lastaufnahmemittel mit zwei Stellplätzen besitzt. Auf diese Weise kann das Regalbediengerät auf dem einen Lastaufnahmemittel bereits den neuen Behälter zum Kommissionierkanal transportieren. Befindet sich auf dem Kommissionierkanal nur ein Behälter, wird der zu entnehmende Behälter vorab auf das zweite Lastaufnahmemittel bzw. auf den zweiten Stellplatz gestellt; anschließend wird sofort der neue Behälter auf den Kommissionierkanal übergeben. Befinden sich auf dem Kommissionierkanal zwei Behälter, werden zunächst beide Behälter in das Regal zurückgestellt und anschließend durch zwei neue Behälter ersetzt.

Zum Ein- und Auslagem der Behälter in bzw. aus den Regalfächern sowie zum Übergeben und Abholen der Behälter ist das Lastaufnahmemittel des Regalbediengerätes vorzugsweise mit einem Teleskopausleger ausgerüstet.

Die Übergabe der Behälter vom Lastaufnahmemittel auf den Kommissionierkanal und zurück kann gemäß einer Ausgestaltung der Erfindung mit Hilfe eines Riemen- oder Bandförderers geschehen.

Zur Erleichterung der Kommissionierung kann eine elektronische Bedienerführung vom Typ "Pick-by-Light" an den Kommissionierkanälen angeordnet werden.

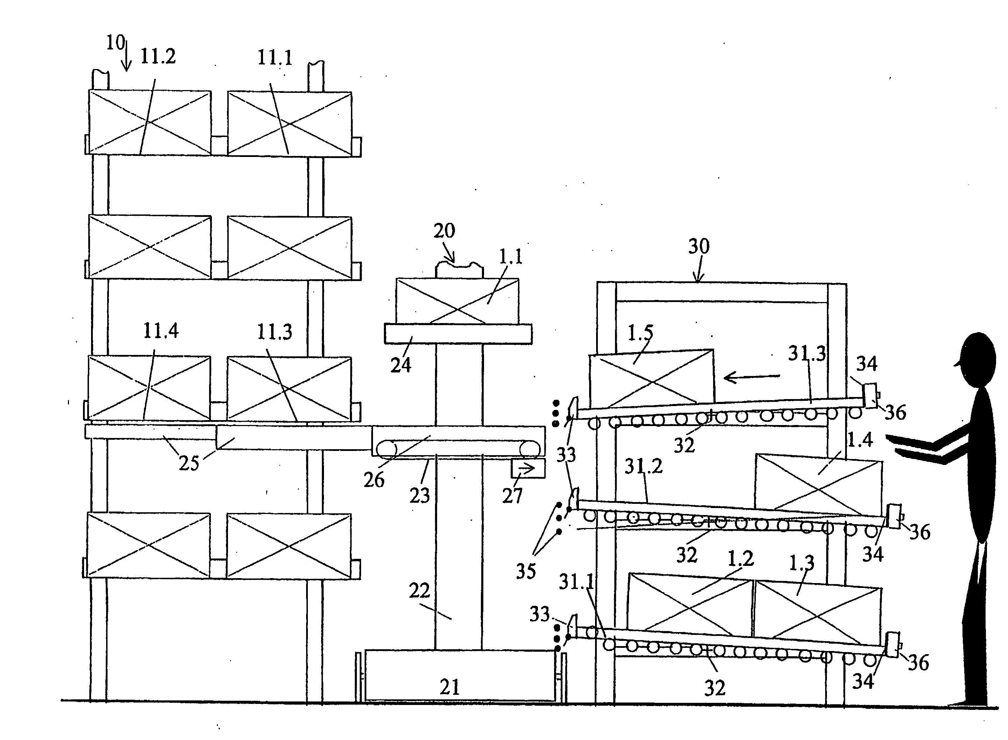

Anhand der Zeichnung soll die Erfindung in Form eines Ausführungsbeispiels rein schematisch dargestellt werden.

Die Figur zeigt ein Lagerregal 10, auf dem jeweils zwei Behälter 11.1, 11.2, 11.3, 11.4 hintereinander in einem Regalfach stehen. Vor dem Lagerregal 10 fährt ein Regalbediengerät 20, bestehend aus einem Fahrwerk 21 und einem Mast 22, an dem zwei Lastaufnahmemittel 23, 24 angeordnet sind. Das untere Lastaufnahmemittel 23 hat gerade seinen Teleskopausleger 25 ausgefahren, um zwei Behälter 11.3, 11.4 in ein leeres Regalfach zu stellen. Auf dem oberen Lastaufnahmemittel 24 steht ein Behälter 1.1 mit zu kommissionierenden Artikeln.

Rechts vom Regalbediengerät 20 sind in drei Ebenen übereinander Kommissionierkanäle 31.1, 31.2, 31.3 in einem Kommissionierregal 30 zu erkennen. Alle drei sind einteilig und um ihre Querachse 32 kippbar. Verriegelungen 35 fixieren die jeweilige Winkelstellung.

Die beiden unteren Kommissionierkanäle 31.1, 31.2 sind so geneigt, dass die auf ihnen stehenden Behälter 1.2, 1.3, 1.4 allein unter dem Einfluss der Schwerkraft zu dem kommissionierenden Personal hinrollen, wo sie gegen einen Endanschlag 34 stoßen. Dort ist auch eine elektronische Bedienerführung 36, z. B. vom Typ "Pick-by-Light", angebracht.

Auf dem obersten Kommissionierkanal 31.3 steht ein Behälter 1.5 mit Ware, die nicht mehr benötigt wird. Aus diesem Grunde ist der Kommissionierkanal 31.3 in die andere Richtung gekippt, so dass der Behälter 1.5 allein unter dem Einfluss der Schwerkraft zu dem anderen Ende und gegen einen dort vorgesehenen beweglichen Endanschlag 33 gerollt ist. An dieser Stelle stehend wird er vom Regalbediengerät 20 auf das leere Lastaufnahmemittel 23 übemommen; unmittelbar darauf wird der auf dem zweiten Lastaufnahmemittel 24 mitgeführte Behälter 1.1 auf den dann leeren Kommissionierkanal 31.3 übergeben. Nachdem der Kommissionierkanal 31.3 wieder in die andere Richtung gekippt wurde, rollt der Behälter 1.1 gegen den vorderen Anschlag 34 und ist bereit zur Bearbeitung.

Es versteht sich, dass das Regalbediengerät 20 nicht nur teilweise gefüllte Behälter vom Kommissionierkanal in ein Regalfach zurücktransportieren kann, sondern auch leere Behälter zu einem entsprechenden Sammellager. Dank dessen braucht das Kommissionierpersonal die leeren Behälter nicht mehr von Hand vom Kommissionierkanal herunterheben und auf ein gesondertes Abtransportsystem zu stellen.

## Patentansprüche

1. Verfahren zum Kommissionieren einer Vielzahl von Artikeln, die sich in einer entsprechenden Vielzahl von Behältern (1.1, 1.2, 1.3, 1.4, 1.5; 11.1, 11.2, 11.3, 11.4) befinden, im wesentlichen umfassend die Verfahrensschritte:
- Auslagem der Behälter (1.1 ... 11.4) aus einem Regallager (10),
- programmgesteuertes Transportieren der Behälter (1.1) von ihrem Regalplatz zu einer Übergabestelle am Anfang eines Kommissionierkanals (31.1, 31.2, 31.3),
- Schwerkrafttransport der Behälter (1.2, 1.3, 1.4, 1.5) zur Kommissionierposition,
- Rückfördem nicht mehr benötigter Behälter (1.5) an die Übergabestelle
- und programmgesteuerter Rücktransport der Behälter (1.1) in einen Regalplatz im Regallager (10),
**gekennzeichnet durch** die Merkmale:
- die Kommissionierkanäle (31.1, 31.2, 31.3) sind einteilig,
- zum Rückfördern des Behälters (1.5) von der Kommissionierposition zur Übergabestelle wird der Kommissionierkanal (31.3) gekippt,
- das Rückfördern erfolgt mittels Schwerkraft.

2. Verfahren nach Anspruch 1, **gekennzeichnet durch** das Merkmal:
- das Kippen des Kommissionierkanals (31.3) wird von einer Bedienungsperson ausgelöst.

3. Verfahren nach Anspruch 1, **gekennzeichnet durch** das Merkmal:
- das Kippen des Kommissionierkanals (31.3) wird von einem Regalbediengerät (20) ausgelöst.

4. Verfahren nach Anspruch 1, **gekennzeichnet durch** das Merkmal:
- das Kippen des Kommissionierkanals (31.3) wird von einer Programmsteuereinheit ausgelöst.

5. Verfahren nach einem der Ansprüche 1 bis 4, **gekennzeichnet durch** das Merkmal:
- zwei Behälter werden auf dem Regalbediengerät (20) umsortiert.

6. Vorrichtung zur Durchführung des Verfahrens nach den Ansprüchen 1 bis 5, im wesentlichen umfassend
- ein Regallager (10) mit einer Vielzahl von Regalplätzen,
- ein Regalbediengerät (20) mit wenigstens einem Lastaufnahmemittel (23, 24),
- eine Mehrzahl von Kommissionierkanälen (31.1, 31.2, 31.3) mit
- einer Übergabestelle an dem dem Regalbediengerät (20) benachbarten Ende
- und eine Kommissionierposition am anderen Ende,
- und eine Mehrzahl von Behältern (1.1, 1.2, 1.3, 1.4, 1.5; 11.1, 11.2, 11.3, 11.4, 11.5) mit den zu kommissionierenden Waren, **gekennzeichnet durch** das Merkmal:
- die Kommissionierkanäle (31.1, 31.2, 31.3) sind einteilig,
- die Kommissionierkanäle (31.1, 31.2, 31.3) sind um ihre Querachse (32) kippbar.

7. Vorrichtung nach Anspruch 6, **gekennzeichnet durch** das Merkmal:
- die Kommissionierkanäle (31.1, 31.2, 31.3) besitzen beidseitig Endanschläge (33, 34).

8. Vorrichtung nach Anspruch 7, **gekennzeichnet durch** das Merkmal:
- der Endanschlag (33) an der Übergabestelle ist beweglich.

9. Vorrichtung nach einem der Ansprüche 6 bis 8, **gekennzeichnet durch** das Merkmal:
- die Kommissionierkanäle (31.1, 31.2, 31.3) sind als Rollenbahn ausgeführt

10. Vorrichtung nach einem der Ansprüche 6 bis 9, **gekennzeichnet durch** das Merkmal:
- den Kommissionierkanälen (31.1, 31.2, 31.3) ist je ein Pneumatik- oder Hydraulikzylinder zugeordnet.

11. Vorrichtung nach einem der Ansprüche 6 bis 9, **gekennzeichnet durch** das Merkmal:
- eine am Regalbediengerät (20) angeordnete Betätigungsvorrichtung verstellt die Kommissionierkanäle (31.1, 31.2, 31.3).

12. Vorrichtung nach einem der Ansprüche 1 bis 11, **gekennzeichnet durch** das Merkmal:
- das Regalbediengerät (20) besitzt zwei Lastaufnahmemittel (23, 24).

13. Vorrichtung nach einem der Ansprüche 6 bis 12, **gekennzeichnet durch** das Merkmal:
- das Regalbediengerät (20) besitzt ein Lastaufnahmemittel mit zwei Stellplätzen.

14. Vorrichtung nach einem der Ansprüche 6 bis 13, **gekennzeichnet durch** das Merkmal:
- das Lastaufnahmemittel (23, 24) besitzt einen Teleskopausleger (25).

15. Vorrichtung nach einem der Ansprüche 6 bis 14, **gekennzeichnet durch** das Merkmal:
- das Lastaufnahmemittel (23, 24) besitzt einen Riemen- oder Bandförderer (26).

16. Vorrichtung nach einem der Ansprüche 6 bis 15, **gekennzeichnet durch** das Merkmal:
- die Kommissionierkanäle (31.1, 31.2, 31.3) sind in ihrer jeweiligen Winkelposition einrast- und verriegelbar.

17. Vorrichtung nach einem der Ansprüche 6 bis 16, **gekennzeichnet durch** das Merkmal:
- den Kommissionierkanälen (31.1, 31.2, 31.3) ist eine elektronische Bedienerführung "Pick-by-Light" zugeordnet.

## Claims

1. A method of order picking a plurality of articles which are situated in a corresponding number of containers (1.1, 1.2,1.3,1.4,1.5;11,1,11.2,11.3,11.4), substantially comprising the method steps:
- retrieving the containers (1.1 ...11.4) from a shelving store (10),
- program-controlled conveyance of the containers (1.1) from their shelving location to a transfer point at the start of an order picking channel (31.1,31.2,31.3),
- gravity conveyance of the containers (1.2,1.3,1.4,1.5) to the order picking position,
- returning no longer required containers (1.5) to the transfer point
- and program-controlled return conveyance of the containers (1.1) into a shelving location in the shelving store (10),
**characterised by** the features:
- the order picking channels (31.1,31.2,31.3) are one-piece,
- the order picking channel (31.3) is tilted so as to return the container (1.5) from the order picking position to the transfer point,
- the return takes place by means of gravity.

2. A method according to Claim 1, **characterised by** the feature:
- the tilting of the order picking channel (31.3) is initiated by an operator.

3. A method according to Claim 1, **characterised by** the feature:
- the tilting of the order picking channel (31.3) is initiated by an aisle stacker (20).

4. A method according to Claim 1, **characterised by** the feature:
- the tilting of the order picking channel (31.3) is initiated by a program-control unit.

5. A method according to any one of Claims 1 to 4, **characterised by** the feature:
- two containers are sorted by exchange on the aisle stacker (20).

6. An apparatus for carrying out the method according to Claims 1 to 5, substantially comprising
- a shelving store (10) with a plurality of shelving locations,
- an aisle stacker (20) with at least one lifting and handling attachment (23,24),
a plurality of order picking channels (31.1,31.2,31.3) with
- a transfer point at the end adjacent the aisle stacker (20)
- and an order picking position at the other end,
- and a plurality of containers (1.1,1.2,1.3,1.4,1.5;11,1, 11.2,11.3,11.4,11.5) with the goods to be order picked, **characterised by** the feature:
- the order picking channels (31.1,31.2,31.3) are one-piece,
- the order picking channels (31.1,31.2,31.3) can be tilted about their transverse axis (32).

7. An apparatus according to Claim 6, **characterised by** the feature:
- the order picking channels (31.1,31.2,31.3) have end stops (33,34) at both ends.

8. An apparatus according to Claim 7, **characterised by** the feature:
- the end stop (33) is movable at the transfer point.

9. An apparatus according to any one of Claims 6 to 8, **characterised by** the feature:
- the order picking channels (31.1,31.2,31.3) are in the form of roller conveyors.

10. An apparatus according to any one of Claims 6 to 9, **characterised by** the feature:
- a pneumatic or hydraulic cylinder is associated with each of the order picking channels (31.1,31.2,31.3).

11. An apparatus according to any one of Claims 6 to 9, **characterised by** the feature:
- an actuating device disposed on the aisle stacker (20) shifts the order picking channels (31.1,31.2,31.3).

12. An apparatus according to any one of Claims 6 to 11, **characterised by** the feature:
- the aisle stacker (20) has two lifting and handling attachments (23,24).

13. An apparatus according to any one of Claims 6 to 12, **characterised by** the feature:
- the aisle stacker (20) has a lifting and handling attachment with two control positions.

14. An apparatus according to any one of Claims 6 to 13, **characterised by** the feature:
- the lifting and handling attachment (23,24) has a telescopic side arm (25).

15. An apparatus according to any one of Claims 6 to 14, **characterised by** the feature:
- the lifting and handling attachment (23,24) has a belt or band conveyor (26).

16. An apparatus according to any one of Claims 6 to 15, **characterised by** the feature:
- the order picking channels (31.1,31.2,31.3) can be engaged and locked in their respective angular position.

17. An apparatus according to any one of Claims 6 to 16, **characterised by** the feature:
- an electronic operator guide "Pick-by-Light" is associated with the order picking channels (31.1,31.2,31.3).

## Revendications

1. Procédé de rassemblage et de préparation d'une multitude d'articles qui se trouvent dans une multitude correspondante de récipients (1.1, 1.2, 1. 3, 1. 4, 1. 5 ; 11.1, 11. 2, 11. 3, 11.4), comprenant essentiellement les étapes de procédé :
- déstockage des récipients (1.1 ... 11.4) d'un rayonnage (10), transport commandé par programme des récipients (1.1) de leur place dans le rayonnage à un lieu de transfert au début du canal de rassemblage et de préparation ( 31. 1, 31. 2, 31. 3) ,
- transport par gravité des récipients (1.1, 1. 2, 1. 3, 1. 4, 1.5) en position de rassemblage et de préparation,
- reconvoyage des récipients (1.5) qui ne sont plus nécessaires au lieu de transfert,
- et retransport des récipients (1.1), commandé par programme, dans un emplacement sur les rayons du rayonnage (10),
**caractérisé en ce que** :
- les canaux de rassemblage et de préparation (31.1, 31.2, 31.3) sont en une seule pièce,
- pour le reconvoyage du récipient (1.5) de la position de rassemblage et de préparation vers le lieu de transfert, le canal de rassemblage et de préparation (31.3) est basculé,
- le reconvoyage s'effectue par la force de la pesanteur.

2. Procédé selon la revendication 1, **caractérisé en ce que** :
- le basculement du canal de rassemblage et de préparation (31.3) est déclenché par un opérateur.

3. Procédé selon la revendication 1, **caractérisé en ce que** :
- le basculement du canal de rassemblage et de préparation (31.3) est déclenché par un transtockeur (20).

4. Procédé selon la revendication 1, **caractérisé en ce que** :
- le basculement du canal de rassemblage et de préparation (31.3) est déclenché par une unité de commande programmable.

5. Procédé selon l'une quelconque des revendications 1 à 4, **caractérisé en ce que** :
- deux récipients sont triés sur le transtockeur (20).

6. Dispositif pour l'exécution du procédé selon l'une quelconque des revendications 1 à 5, comprenant essentiellement :
- un rayonnage (10) avec une multitude d'emplacements de rayonnage,
- un transtockeur (20) avec au moins un moyen de prise de charge (23, 24),
- une pluralité de canaux de rassemblage et de préparation (31.1, 31.2, 31.3) avec
- un emplacement de transfert à l'extrémité voisine du transtockeur (20)
- et une position de rassemblage et de préparation à l'autre extrémité,
- et une pluralité de récipients (1.1, 1. 2, 1. 3, 1. 4, 1.5 ; 11.1, 11.2, 11.3, 11.4, 11.5) avec les marchandises à rassembler et à préparer,
**caractérisé en ce que** :
- les canaux de rassemblage et de préparation (31.1, 31.2, 31.3) sont en une pièce,
- les canaux de rassemblage et de préparation (31.1, 31.2, 31.3) sont basculants autour de leur axe transversal (32).

7. Dispositif selon la revendication 6, **caractérisé en ce que** :
- les canaux de rassemblage et de préparation (31.1, 31.2, 31.3) possèdent des deux côtés des butées de fin de course (33, 34).

8. Dispositif selon la revendication 7, **caractérisé en ce que** :
- la butée de fin de course (33), au lieu de transfert, est mobile.

9. Dispositif selon l'une quelconque des revendications 6 à 8, **caractérisé en ce que** :
- les canaux de rassemblage et de préparation (31.1, 31.2, 31.3) sont réalisés sous forme de piste à rouleaux.

10. Dispositif selon l'une quelconque des revendications 6 à 9, **caractérisé en ce que** :
- à chaque canal de rassemblage et de préparation (31.1, 31.2, 31.3) est affecté un vérin pneumatique ou hydraulique.

11. Dispositif selon l'une quelconque des revendications 6 à 9, **caractérisé en ce que** :
- un dispositif d'actionnement disposé sur le transtockeur (20) change le réglage des canaux de rassemblage et de préparation (31.1, 31.2, 31.3)

12. Dispositif selon l'une quelconque des revendications 1 à 11, **caractérisé en ce que** :
- le transtockeur (20) possède deux moyens de prise de charge (23, 24).

13. Dispositif selon l'une quelconque des revendications 6 à 12, **caractérisé en ce que** :
- le transtockeur (20) possède un moyen de prise de charge avec deux places.

14. Dispositif selon l'une quelconque des revendications 6 à 13, **caractérisé en ce que** :
- le moyen de prise de charge (23, 24) possède une flèche télescopique (25).

15. Dispositif selon l'une quelconque des revendications 6 à 14, **caractérisé en ce que** :
- le moyen de prise de charge (23, 24)- possède un convoyeur à courroies ou à bande (26).

16. Dispositif selon l'une quelconque des revendications 6 à 15, **caractérisé en ce que** :
- les canaux de rassemblage et de préparation (31.1, 31.2, 31.3) sont encliquetables et verrouillables dans leur position angulaire respective.

17. Dispositif selon l'une quelconque des revendications 6 à 16, **caractérisé en ce que** :
- aux canaux de rassemblage et de préparation (31.1, 31.2, 31.3) est affecté un système de guidage électronique de l'opérateur « Pick-by-Light ».
